# EUROPÄISCHE PATENTSCHRIFT

(11) **EP 1 189 044 B1**
(45) Veröffentlichungstag und Bekanntmachung des Hinweises auf die Patenterteilung: **18.07.2007**
(21) Anmeldenummer: 00120036.9
(22) Anmeldetag: 14.09.2000
(51) Int. Cl.: G01H 1/00

(54) **Dampfturbine und Verfahren zur Messung der Schwingung einer Laufschaufel in einem Strömungskanal einer Dampfturbine**
Steam turbine and method to determine the rotation of a rotor blade in the flow channel of a steam turbine
Turbine à vapeur et méthode pour déterminer la rotation d une aube de rotor dans un canal d'écoulement d'une turbine à vapeur

(43) Veröffentlichungstag der Anmeldung: 20.03.2002
(73) Patentinhaber: SIEMENS AKTIENGESELLSCHAFT, 80333 München (DE)
(72) Erfinder: Woditschka, Frank, 47229 Duisburg (DE)

(56) Entgegenhaltungen:
- EP-A- 0 558 843
- US-A- 4 080 823
- US-A- 4 914 953
- US-A- 5 570 186

## Beschreibung

Die Erfindung betrifft eine Dampfturbine mit einem Strömungskanal, in dem eine Laufschaufel angeordnet ist, wobei ein Messsystem zur Messung einer Schwingung der Laufschaufel vorgesehen ist. Die Erfindung betrifft auch ein Verfahren zur Messung der Schwingung einer Laufschaufel in einem Strömungskanal einer Dampfturbine.

Die Erfindung liegt auf dem technischen Gebiet der Schaufelschwingungsmessung in Strömungsmaschinen. Laufschaufeln in Strömungsmaschinen unterliegen hohen Belastungen. Sie können aufgrund wechselnder Beanspruchungen in eine Schwingung versetzt werden, die, falls sie in der Nähe einer Eigenschwingung in der jeweiligen Schaufel liegt, zu einer besonders hohen mechanischen Beanspruchungen dieser Schaufel führen. Um solche besonders hohen Belastungen frühzeitig zu erkennen, werden die Schwingungszustände der Schaufeln auf unterschiedliche Weise gemessen.

In der US 4,996,880 ist eine Dampfturbine und ein Verfahren zur Messung der Schwingung einer Laufschaufel im Strömungskanal einer Dampfturbine offenbart. Die Messung der Schwingung der Laufschaufel geschieht hier mittels eines akustischen Signals. Mit einem akustischen Sensor wird eine Dopplerverschiebung gemessen, die durch die Bewegung der Laufschaufel hervorgerufen wird. Abhängig vom Schwingungszustand der Laufschaufel ergibt sich ein charakteristisches Dopplersignal, so dass umgekehrt vom Dopplersignal auf den Schwingungszustand der Laufschaufel geschlossen werden kann.

Die US 4,518,917 zeigt ein Verfahren zur Messung des Schwingungszustandes von Laufschaufeln, bei dem der Abstand der Schaufeln zum umgebenden Gehäuse gemessen wird. Dabei wird eine Impedanzabhängigkeit von im Gehäuse angeordneten Sensoren benutzt. Je nach Entfernung einer Laufschaufel vom Sensor ergibt sich eine Impedanzänderung.

Ein weiteres Verfahren zur Messung der Schwingung einer Laufschaufel offenbart die US 4,934,192. Hier wird eine axiale Auslenkung aufgrund einer axialen Schwingung der Laufschaufel dadurch gemessen, dass zwei Sensoren im Ruhezustand der Laufschaufel symmetrisch über eine Erhebung auf der Laufschaufelspitze angeordnet sind. Die Sensoren sind jeweils als eine elektrische Wicklung aufgebaut, in der je nach Abstand von der Erhebung auf der Laufschaufelspitze eine Spannung induziert wird. Bei einer aufgrund einer axialen Schwingung der Laufschaufel auftretenden asymmetrischen Anordnung der Sensoren gegenüber der Laufschaufelspitze wird ein Differenzsignal erzeugt, welches die Schaufelschwingung charakterisiert.

Im Aufsatz "A Review of Analysis Techniques for Blade Tip Timing Measurements", S. Heath, M. Imregum, ASME-Veröffentlichung 97/GT/218, vorgestellt auf der International Gas Turbine and Aeroengine Congress and Exhibition, Orlando, Fl., U.S.A., 02.-05.1997, ist ein Verfahren zur Messung der Schaufelschwingung mittels Laser beschrieben. Dieses Verfahren betrifft allerdings ausschließlich Gasturbinen.

Weitere Verfahren sind aus US 55 70 186, US 4080823, EP 0 558 843 und US 4914 953 bekannt.

Die genannten Verfahren zur berührungslosen Messung der Schwingung einer Laufschaufel sind entweder vergleichsweise ungenau oder erfordern einen magnetisierbaren Laufschaufelwerkstoff oder das umständliche und unzuverlässige Anbringen einer magnetischen Markierung auf der Laufschaufel. Dementsprechend ist es Aufgabe der Erfindung, eine Dampfturbine anzugeben, bei der die Messung der Schwingung einer Laufschaufel berührungslos in einer zuverlässigen und von Eigenschauften der Laufschaufel weitgehend unabhängigen Weise möglich ist. Weitere Aufgabe der Erfindung ist die Angabe eines entsprechenden Verfahrens zur Messung der Schwingung einer Laufschaufel.

Erfindungsgemäß wird die auf eine Dampfturbine gerichtete Aufgabe gelöst durch eine Dampfturbine mit einem Strömungskanal, in dem eine Laufschaufel angeordnet ist, und mit einem Messsystem zur Messung einer Schwingung einer Laufschaufel, wobei das Messsystem einen Sender zur Emission eines Lichtstrahls auf die Laufschaufel und einen Empfänger zum Empfang des von der Laufschaufel reflektierten Lichtstrahls umfasst, und wobei der Sender vom Empfänger getrennt ist und Sender und Empfänger so angeordnet sind, dass der gesendete Lichtstrahl und der reflektierte Lichtstrahl miteinander einen Reflexionswinkel von mindestens 45° einschließen, wobei der Empfänger in einem den Strömungskanal begrenzenden Gehäuse gegenüber dem Strömungskanal zurückversetzt so angeordnet ist, dass neben dem direkt reflektierten Lichtstrahl allenfalls ein geringer Anteil an Streustrahlung zum Empfänger gelangt.

Bisher wurde es nicht einmal in Erwägung gezogen, ein optisches Messsystem zur Messung des Schwingungszustands einer Laufschaufel in einem Strömungskanal einer Dampfturbine anzuwenden. Dies liegt daran, dass der im Strömungskanal strömende Dampf ein optisches Erfassen der Laufschaufel nach herrschender Meinung aufgrund hoher Streuung im Dampf nahezu unmöglich macht. Dabei wurde allerdings bisher immer von Messsystemen ausgegangen, bei denen Sender und Empfänger in einer Einheit zusammengefasst waren, so dass grundsätzlich in Rückstreuung gemessen wird. Solche Systeme werden beispielsweise zum Messen von Schaufelschwingungen von Gasturbinen eingesetzt. Sie bieten den Vorteil, dass nur ein Eingriff in das den Strömungskanal begrenzende Gehäuseteil zum Einbau von Sender und Empfänger nötig ist. Nach Erkenntnis der Erfindung kann nun ein solches optisches Messsystem auch in einer Dampfturbine zur Messung einer Schaufelschwingung herangezogen werden, wenn vom starren Konzept der gekoppelten Sender-Empfängereinheit abgewichen wird. Bei einer geeigneten Anordnung von Sender und Empfänger kann nämlich nunmehr der Anteil an Streustrahlung, die vom Dampf hervorgerufen wird, so gering gehalten werden, dass eine zuverlässige Schaufelschwingungsmessung ermöglicht wird.

Durch die Zurückversetzung des Empfängers im Gehäuse wird gewissermaßen eine Blende aufgebaut, die im wesentlichen nur solches Licht zum Empfänger gelangen lässt, welches sich in nahezu gerader Richtung von der beleuchteten Fläche auf der Laufschaufel zum Empfänger ausbreitet. Sich in anderen Winkeln ausbreitende Streustrahlung wird hierdurch zu einem großen Teil vor dem Eintritt in den Empfänger abgeschirmt.

Sender und Empfänger müssen nicht als vollständig lichterzeugende bzw. lichtumwandelnde Einheit ausgebildet sein, sie können auch beispielsweise als Glasfaserkabel ausgebildet sein und einen Lichtstrahl von einer Lichtquelle bzw. zu einer Umwandlungseinheit, wie etwa eine Photozelle, leiten.

Vorzugsweise ist der Sender zur Emission eines Laserstrahls ausgelegt. Aufgrund seiner Monochromasie und niedrigen Divergenz ist ein Laserstrahl besonders gut für die Messung geeignet.

Weiter bevorzugt ist der Reflexionswinkel größer als 90°. In einer solchen großwinkligen Anordnung ergibt sich ein gutes Verhältnis von direkt in den Empfänger reflektiertem Lichtstrahl zu im Dampf hervorgerufener Streustrahlung, da der Streustrahlungsanteil mit größerem Winkel sinkt.

Vorzugsweise ist der Sender so eingestellt, dass der gesendete Lichtstrahl auf der Laufschaufel eine Fläche von weniger als 1 mm² beleuchtet. Eine hohe Fokussierung bzw. eine niedrige Divergenz des Lichtstrahls begünstigt ebenfalls einen niedrigen Anteil an Streustrahlung.

Bevorzugtermaßen besteht die Laufschaufel aus einem nichtmagnetischen Werkstoff. Weiter bevorzugt besteht die Laufschaufel aus einer titanbasierten Legierung. Mit nichtmagnetisch ist hier gemeint, dass der Laufschaufelwerkstoff nicht in nennenswerter Weise ferromagnetische Eigenschaften aufweist. Gerade bei einem solchen Werkstoff scheidet eine einfache berührungslose Messung mittels magnetischer Induktion aus. Ein solcher Werkstoff ist beispielsweise eine titanbasierte Legierung, die in neuen Generationen von Dampfturbinen, insbesondere bei sehr großen Laufschaufeln von den letzten Stufen von Niederdruckteilen, eingesetzt werden. Gerade solche großen Schaufeln sind aber anfällig gegenüber einer Schwingungsanregung und werden durch Schwingungen erheblich belastet. Gerade hier muss also ein zuverlässiges Überwachungssystem zur Messung der Schaufelschwingungszustände zum Einsatz kommen. Mittels des optischen Überwachens der Schaufelschwingungen ist dies in einfacher und zuverlässiger Weise auch für solche Schaufeln möglich.

Erfindungsgemäß wird die auf ein Verfahren gerichtete Aufgabe gelöst durch ein Verfahren gemäß Anspruchs 7.

Die Vorteile eines solchen Verfahrens ergeben sich entsprechend den obigen Ausführungen zu den Vorteilen der Dampfturbine.

Vorzugsweise ist der Reflexionswinkel größer als 90°.

Bevorzugtermaßen wird als Lichtstrahl ein Laserstrahl verwendet.

Vorzugsweise wird der Lichtstrahl auf eine auf der Laufschaufel liegende Reflexionsfläche so geleitet, dass der beleuchtete Teil der Reflexionsfläche kleiner als 50 mm² ist.

Bevorzugtermaßen besteht die Laufschaufel aus einem nicht magnetischen Material, weiter bevorzugt aus einer titanbasierten Legierung.

Die Erfindung wird beispielhaft anhand der Zeichnung näher erläutert. Es zeigen teilweise schematisch und nicht maßstäblich:
- FIG 1: eine Dampfturbine und
- FIG 2: ein Messsystem zur Messung der Schwingung einer Laufschaufel in einer Dampfturbine.

Gleiche Bezugszeichen haben in den verschiedenen Figuren die gleiche Bedeutung.

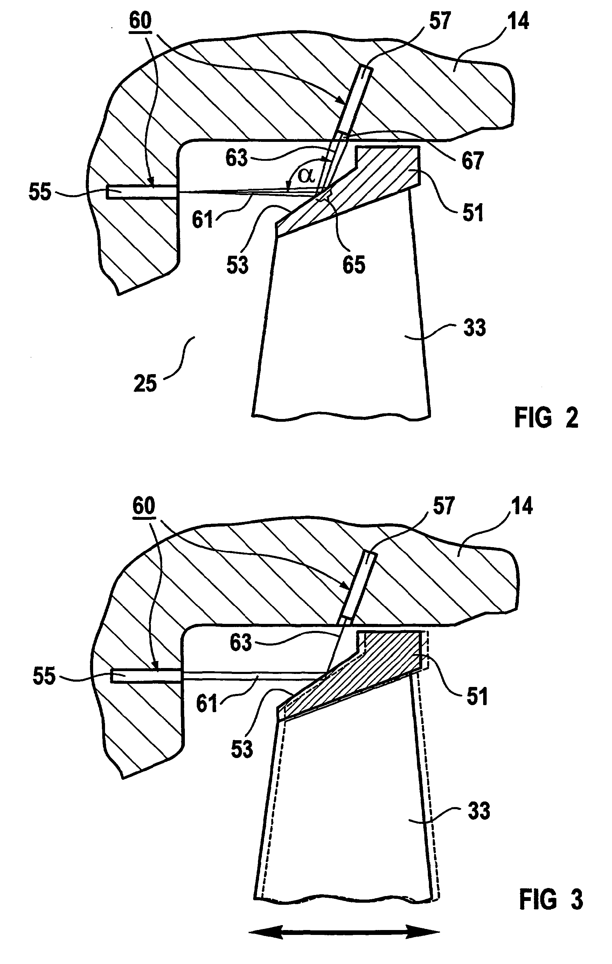

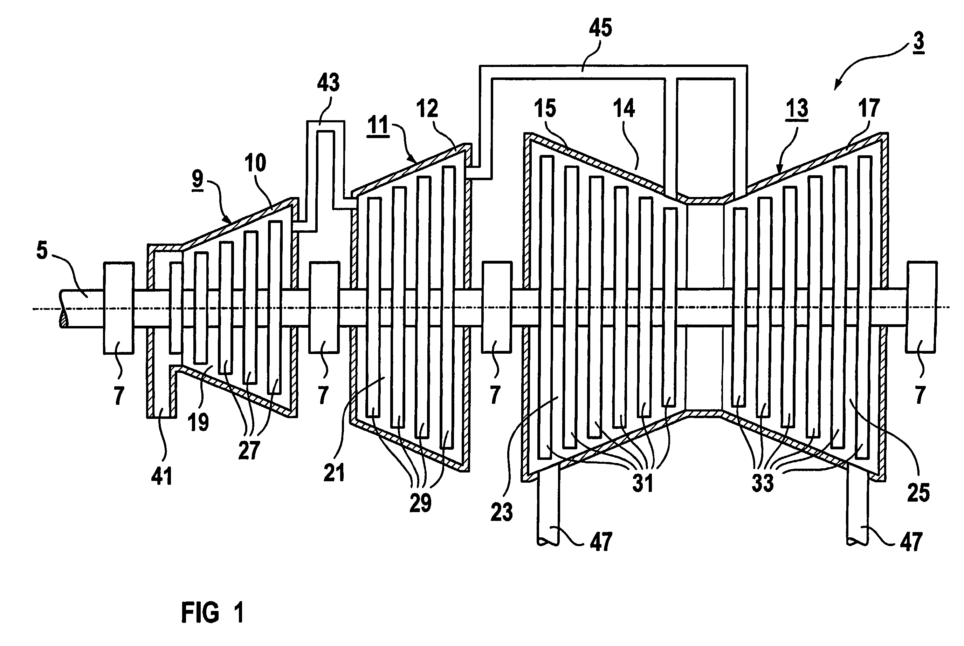

Figur 1 zeigt eine Dampfturbine 3. Auf einer gemeinsamen Welle 5 sind zwischen Lagern 7 hintereinander angeordnet ein Hochdruckteil 9, ein Mitteldruckteil 11 und ein zweiflutiges Niederdruckteil 13. Das zweiflutige Niederdruckteil 13 besteht aus einer ersten Niederdruckhälfte 15 und aus einer zweiten Niederdruckhälfte 17. Das Niederdruckteil 13 weist ein Niederdruckgehäuse 14 auf. Das Mitteldruckteil 11 weist ein Mitteldruckgehäuse 12 auf. Das Hochdruckteil 9 weist ein Hochdruckgehäuse 10 auf. Das Hochdruckteil 9 weist einen Hochdruck-Strömungskanal 19 auf. Das Mitteldruckteil 11 weist einen Mitteldruck-Strömungskanal 21 auf. Das Niederdruckteil 13 weist in der ersten Niederdruckhälfte 15 einen ersten Niederdruck-Strömungskanal 23 und in der zweiten Niederdruckhälfte 17 einen zweiten Niederdruck-Strömungskanal 25 auf. Im Hochdruck-Strömungskanal 19 sind Laufschaufeln 27 in aufeinander folgenden Laufschaufelkränzen angeordnet. Im Mitteldruck-Strömungskanal 21 sind Mitteldruck-Laufschaufeln 29 in aufeinander folgenden Laufschaufelkränzen angeordnet. Im Niederdruck-Strömungskanal 23 der ersten Niederdruckhälfte 15 sind Laufschaufeln 31 in aufeinander folgenden Laufschaufelkränzen angeordnet. Im Niederdruck-Strömungskanal 25 der zweiten Niederdruckhälfte 17 des Niederdruckteils 13 sind Laufschaufeln 33 in aufeinander folgenden Laufschaufelkränzen angeordnet.

Im Betrieb der Dampfturbine 3 wird dem Hochdruckteil 9 über eine Hochdruck-Dampfzuleitung 41 Frischdampf zugeführt, der sich im Hochdruckteil 9 teilweise entspannt und dabei Energie in Rotationsenergie der Welle 5 umsetzt. Der teilweise entspannte Dampf wird über eine Mitteldruck-Dampfzuleitung 43 anschließend dem Mitteldruckteil 11 zugeleitet, wo er sich weiter entspannt und weitere Rotationsenergie auf die Welle 5 überträgt. Anschließend wird der Dampf über eine Niederdruck-Dampfzuleitung 45 dem Niederdruckteil 13 doppelflutig so zugeleitet, dass er parallel einerseits die erste Niederdruckhälfte 15 und andererseits die zweite Niederdruckhälfte 17 durchströmt. Dabei entspannt sich der Dampf weiter und weitere Rotationsenergie wird auf die Welle 5 übertragen. Der weitgehend entspannte Dampf wird über Ableitungen 47 anschließend einem nicht dargestellten Kondensator zugeführt. Ebenfalls aufgrund einer besseren Übersichtlichkeit nicht dargestellt sind Leitschaufeln, die abwechselnd zu den Laufschaufeln in axialer Richtung in den Strömungskanälen angeordnet sind.

Der an den Laufschaufeln vorbeiströmende Dampf kann dazu führen, dass die Laufschaufeln in Schwingungen versetzt werden. Insbesondere gilt dies für die sehr großen Laufschaufeln 31, 33 des Niederdruckteils 13, und zwar insbesondere für die letzten Stufen des Niederdruckteils 13. Solche Schwingungen können zu einer Lebensdauer zehrenden Belastung der Laufschaufeln 31, 33 führen. Um dies frühzeitig zu erkennen, wird der Schwingungszustand jeder Laufschaufel 31, 33 überwacht. Mit bisheriger Messtechnik war dies nur in aufwendiger Weise oder bei unmagnetischen Laufschaufeln 31, 33 praktisch gar nicht möglich. Das nunmehr vorgeschlagene optische Messsystem wird naher anhand von Figur 2 erläutert.

Figur 2 zeigt einen Ausschnitt aus der zweiten Niederdruckhälfte 17 der Figur 1. Im Niederdruckgehäuse 14 ist ein Messsystem 60 angeordnet. Das Messsystem 60 umfaßt einen Sender 55 und einen Empfänger 57. Durch den Sender 55 wird ein Lichtstrahl 61, ausgebildet als Laserstrahl, in den Strömungskanal 25 eingeleitet und auf eine Laufschaufel 33 geleitet. Die Laufschaufel 33 weist ein Deckband 51 auf, welches zum Sender 55 hin eine abgeschrägte Reflexionsfläche 53 aufweist. Von der Reflexionsfläche 53 wird der Lichtstrahl 61 als reflektierter Lichtstrahl 63 zum Empfänger 57 geleitet. Der Sender 55 und der Empfänger 57 sind voneinander so getrennt, dass sich ein Winkel α größer als 90° zwischen dem einfallenden Lichtstrahl 61 und dem reflektierten Lichtstrahl 63 ergibt. Der Lichtstrahl 61 beleuchtet auf der Reflexionsfläche 53 ein Flächenteil 65, das kleiner ist als 1 mm².

Durch die getrennte Anordnung von Sender 55 und Empfänger 57 ist es möglich, eine Reflexionsmessung auch im vom Dampf durchströmten Strömungskanal 25 der Dampfturbine 3 durchzuführen. Während bisher nach herrschender Meinung der Dampf eine viel zu große Streulichterzeugung zur Folge haben sollte, wodurch eine optische Messung nicht realisierbar wäre, bietet die gezeigte Anordnung aufgrund des vergleichsweise großen Winkels α die Möglichkeit einer zuverlässigen optischen Messung ohne eine Beeinträchtigung durch Streulicht. Dies wird weiter begünstigt durch eine niedrige Divergenz des Lichtstrahls 61 und durch eine Zurückversetzung des Empfängers 57 im Niederdruckgehäuse 14, wodurch eine kanalartige Blende erzeugt wird, die Streulicht weitgehend abschirmt.

## Patentansprüche

1. Dampfturbine (3) mit einem Strömungskanal (25), in dem eine Laufschaufel (33) angeordnet ist, und mit einem Messsystem (60) zur Messung einer Schwingung der Laufschaufel (33), wobei
das Messsystem (60) einen Sender (55) zur Emission eines Lichtstrahles (61) auf die Laufschaufel (33) und einen Empfänger (57) zum Empfang des von der Laufschaufel (33) reflektierten Lichtstrahles (63) umfasst, wobei der Sender (55) vom Empfänger (57) getrennt ist, wobei der Sender (55) und Empfänger (57) so angeordnet sind, dass der gesendete Lichtstrahl (61) und der reflektierte Lichtstrahl (63) miteinander einen Reflexionswinkel (α) von mindestens 45° einschliessen, **dadurch gekennzeichnet, dass** der Empfänger (57) in einem den Strömungskanal (25) begrenzenden Gehäuse (14) gegenüber dem Strömungskanal (25) zurückversetzt so angeordnet ist, dass neben dem direkt reflektierten Lichtstrahl (63) allenfalls ein geringer Anteil an Streustrahlung zum Empfänger (57) gelangt.

2. Dampfturbine nach Anspruch 1,
bei der der Sender (55) zur Emission eines Laserstrahles (61) ausgelegt ist.

3. Dampfturbine (3) nach Anspruch 1,
bei der der Reflexionswinkel (α) mindestens 90° beträgt.

4. Dampfturbine (3) nach Anspruch 1,
bei der der Sender (55) so eingestellt ist, dass der gesendete Lichtstrahl (61) auf der Laufschaufel (33) eine Fläche (65) von weniger als 1 mm² beleuchtet.

5. Dampfturbine (3)nach Anspruch 1,
bei der die Laufschaufel (33) aus einem nichtmagnetischen Werkstoff besteht.

6. Dampfturbine (3) nach Anspruch 7,
bei der die Laufschaufel (33) aus einer Titan-basierten Legierung besteht.

7. Verfahren zur Messung der Schwingung einer Laufschaufel (33) in einem Strömungskanal (25) einer Dampfturbine (3), wobei ein Lichtstrahl (61) auf die Laufschaufel (33) gelenkt und von dieser unter einem Reflexionswinkel (α) grösser als 45° reflektiert und zu einem Empfänger (57) geleitet wird, wobei aus dem so empfangenen Signal die Schaufelschwingung berechnet wird, **dadurch gekennzeichnet, dass** der Empfänge (57) in einem den Strömungskanal (25) begrenzunden Gehäuse (14) gegenüber dem Strömungskanal (25) zurückversetzt angeordnet wird.

8. Verfahren nach Anspruch 7,
bei dem der Reflexionswinkel (α) grösser als 90° ist.

9. Verfahren nach Anspruch 7,
bei dem als Lichtstrahl (61) ein Laserstrahl verwendet wird.

10. Verfahren nach Anspruch 7,
bei dem der Lichtstrahl (61) auf eine auf der Laufschaufel (33) liegende Reflexionsfläche (53) so geleitet wird, dass der beleuchtete Teil (65) der Reflexionsfläche (53) kleiner als 50 mm² ist.

11. Verfahren nach Anspruch 7,
bei dem die Laufschaufel (33) aus einem nichtmagnetischen Material besteht.

12. Verfahern nach Anspruch 11,
bei dem die Laufschaufel (33) aus einer Titan-basierten Legierung besteht.

## Claims

1. Steam turbine (3) having a flow passage (25) in which a moving blade (33) is arranged, and having a measuring system (60) for measuring a vibration of the moving blade (33), in which the measuring system (60) comprises a transmitter (55) for emitting a light beam (61) to the moving blade (33) and a receiver (57) for receiving the light beam (63) reflected from the moving blade (33), the transmitter (55) being separate from the receiver (57), the transmitter (55) and receiver (57) are arranged in such a way that the transmitted light beam (61) and the reflected light beam (63) enclose an angle of reflection (α) of at least 45° with one another, **characterized in that** the receiver (57), in a casing (14) defining the flow passage (25), is arranged so as to be set back from the flow passage (25) in such a way that, apart from the directly reflected light beam (63), at most a small proportion of scattered radiation reaches the receiver (57).

2. Steam turbine according to claim 1, in which the transmitter (55) is designed for emitting a laser beam (61).

3. Steam turbine (3) according to claim 1, in which the angle of reflection (α) is at least 90°.

4. Steam turbine (3) according to claim 1, in which the transmitter (55) is set in such a way that the transmitted light beam (61) illuminates an area (65) of less than 1 mm² on the moving blade (33).

5. Steam turbine (3) according to claim 1, in which the moving blade (33) is made of a non-magnetic material.

6. Steam turbine (3) according to claim 7, in which the moving blade (33) is made of a titanium-based alloy.

7. Method of measuring the vibration of a moving blade (33) in a flow passage (25) of a steam turbine (3), in which a light beam (61) is directed onto a moving blade (33) and is reflected from the latter at an angle of reflection (α) greater than 45° and directed to a receiver (57), the blade vibration being calculated from the signal thus received, **characterized in that** the receiver (57), in a casing (14) defining the flow passage (25), is arranged so as to be set back from the flow passage (25).

8. Method according to claim 7, in which the angle of reflection (α) is greater than 90°.

9. Method according claim 7, in which the light beam (61) used is a laser beam.

10. Method according to claim 7, in which the light beam (61) is directed onto a reflecting surface (53), lying on the moving blade (33), in such a way that the illuminated part (65) of the reflecting surface (53) is less than 50 mm².

11. Method according to claim 7, in which the moving blade (33) is made of a non-magnetic material.

12. Method according to claim 11, in which the moving blade (33) is made of a titanium-based alloy.

## Revendications

1. Turbine (3) à vapeur ayant un canal (25) d'écoulement dans lequel est montée une aube (33) mobile, ayant un système (60) de mesure d'une oscillation de l'aube (33) mobile, dans laquelle
le système (60) de mesure comprend un émetteur (55) d'émission d'un faisceau (61) lumineux sur l'aube (33) mobile et un récepteur (57) de réception du faisceau (63) lumineux réfléchi par l'aube (33) mobile, dans laquelle l'émetteur (55) et le récepteur (57) sont disposés de façon à ce que le faisceau (61) lumineux émis et le faisceau (63) lumineux réfléchi fassent entre eux un angle (α) de réflexion d'au moins 45°,
**caractérisée en ce que** le récepteur (57) est disposé, dans un carter (14) délimitant le canal (25) d'écoulement, en retrait par rapport au canal (25) d'écoulement de façon à ce que, outre le faisceau (63) lumineux réfléchi directement, tout au plus une petite proportion de rayonnement diffusé arrive au récepteur (57).

2. Turbine à vapeur suivant la revendication 1, dans laquelle l'émetteur (55) est conçu pour l'émission d'un faisceau (61) laser.

3. Turbine à vapeur suivant la revendication 1, dans laquelle l'angle (α) de réflexion est d'au moins 90°.

4. Turbine à vapeur suivant la revendication 1, dans laquelle l'émetteur (55) est réglé de façon à ce que le faisceau (61) lumineux émis éclaire sur l'aube (33) mobile une surface d'au moins 1 mm².

5. Turbine à vapeur suivant la revendication 1, **caractérisée en ce que** l'aube (33) mobile est en un matériau amagnétique.

6. Turbine à vapeur suivant la revendication 7, dans laquelle l'aube (33) mobile est en un alliage à base de titane.

7. Procédé de mesure de l'oscillation d'une aube (33) mobile dans un canal (25) d'écoulement d'une turbine (3) à vapeur, dans lequel on dévie un faisceau (61) lumineux sur l'aube (33) mobile et on le réfléchit par celle-ci sous un angle (α) de réflexion supérieur à 45° et on l'envoie à un récepteur (57), dans lequel on calcule l'oscillation de l'aube à partir du signal reçu, **caractérisé en ce que** on dispose le récepteur (57), dans un carter (14) délimitant le canal (25) d'écoulement, en retrait par rapport au canal (25) d'écoulement.

8. Procédé suivant la revendication 7, dans lequel l'angle (α) de réflexion est supérieur à 90°.

9. Procédé suivant la revendication 7, dans lequel on utilise un faisceau laser comme faisceau (61) lumineux.

10. Procédé suivant la revendication 7, dans lequel on envoie le faisceau (61) lumineux sur une surface (53) de réflexion se trouvant sur l'aube (33) mobile de façon à ce que la partie (65) éclairée de la surface (53) de réflexion soit plus petite que 50 mm².

11. Procédé suivant la revendication 7, dans lequel l'aube (33) mobile est en un matériau amagnétique.

12. Procédé suivant la revendication 11, dans lequel l'aube (33) mobile est en un alliage à base de titane.
